# EUROPEAN PATENT APPLICATION

(11) **EP 4 063 450 A1**
(43) Date of publication of application: **28.09.2022**
(21) Application number: 21382235.6
(22) Date of filing: 24.03.2021
(51) Int. Cl.: C08L 23/08, C08L 23/04, B29B 17/00, C08J 9/10, E01C 13/08

(54) **NEW MATERIAL FOR INFILL MANUFACTURING IN ARTIFICIAL TURF SYSTEMS**

(71) Applicant: Alvac, S.A., 40002 Segovia (ES); Green World Compounding, S.L., 30840 Alhama de Murcia (Murcia) (ES)
(72) Inventor: NAVARRO, Salvador, 30840 Alhama de Murcia (Murcia) (ES); GARCÍA, Jesús, 30840 Alhama de Murcia (Murcia) (ES); JIMÉNEZ, Mª Ángeles, 40002 Segovia (SEGOVIA) (ES)
(74) Representative: Pons

(57) **Abstract**

The present invention relates to a novel infill material for use in artificial turf systems characterised in that it is composed of particles larger than 5 mm, free of volatiles, and designed such that it meets the technical FIFA homologation requirements; as well as the method of manufacturing from materials recovered from plastic waste at the end of the useful life thereof, obtaining an system which is ecological, sustainable, recycled and recyclable, and also free of toxic substances which does not pose any health or environmental risks

## Description

The present invention relates to a novel infill material for use in artificial turf systems characterised in that it is composed of particles larger than 5 mm, free of volatiles, and designed such that it meets the technical FIFA homologation requirements; as well as the method of manufacturing from materials recovered from plastic waste at the end of the useful life thereof, obtaining a system which is ecological, sustainable, recycled and recyclable, and also free of toxic substances which does not pose any health or environmental risks.

### STATE OF THE ART

Artificial turf or artificial grass is a surface made of fibres which is used to replace natural grass. The structure of artificial turf is designed such that artificial turf has an appearance which resembles grass. Normally, artificial turf is used as a surface for sports such as football, American football, rugby, tennis, golf, for playing fields or exercise fields. Furthermore, artificial turf is frequently used for garden design applications.

An advantage of using artificial turf is that it eliminates the need to take care of a playing surface or gardens with grass, such as regular mowing, scarification, fertilisation and watering. Watering can be, for example, difficult due to regional restrictions on water use. In other climate zones, the regrowth of grass and the reformation of a closed grass covering is slow compared to the damage to the natural surface of the grass when playing and/or exercising on the field.

One of the most important parts of artificial grass or artificial turf systems is the infill. The infill fulfils two fundamental functions in the artificial turf or grass systems. On the one hand, it protects the biomechanics of players, preventing injuries and improving sports practice; On the other, it protects the grass from wear.

Also, it is interesting to note that the infills used in manufacturing artificial turf currently have significant disadvantages, which include:
• The SBR rubber infills used on artificial turf pitches of several sports contain high concentrations of carcinogenic substances (ECHA). There are alternatives to the use of rubber, but those that technically meet the homologation characteristics are expensive and not sustainable.
• The size of these infills is usually less than 5 mm, making them microplastics which can escape from facilities and easily end up in the ocean.
• Even if they have a recycled origin, these SBR infills have no other purpose beyond energy recovery at the end of the useful life thereof, in other words, they are recycled, but not recyclable.

### DESCRIPTION OF THE INVENTION

In the present invention, a novel artificial turf system has been developed, wherein the presence of cryogenic rubber (SBR) is removed and other infill materials made of recycled plastic materials are used instead, such that a sustainable ecological system is obtained which does not pose any health or environmental risks.

Furthermore, the artificial turf system of the invention has been designed such that the necessary FIFA homologation requirements are met, such that the resulting product is ready for the future implementation thereof on football pitches.

Therefore, in the present invention, a novel material has been developed which replaces the ground rubber used in manufacturing artificial turf on football pitches, which is composed of polyolefin from agricultural, industrial or post-consumer materials at the end of the useful life thereof with registered origin and traceability in order to guarantee the cleanliness and safety of the product, a thermoplastic elastomer compound (TPE), a densifier and a foaming agent.

This material does not have the drawbacks which have been reported in recent years for the rubber used in football pitches, as well as the emission of potentially carcinogenic volatiles in the conditions of use of the product (moisture and heat). Furthermore, the manufacturing of the material is carried out by means of a simple extrusion process.

Thus, in a first aspect, the present invention relates to an infill for artificial turf characterised in that it comprises particles larger than 5 mm, and in that it has a composition comprising:
- a polyolefin base in a percentage between 53 and 82% by weight;
- a thermoplastic elastomer compound in a percentage between 10 and 30% by weight;

- a densifier in a percentage between 3 and 7% by weight;
- a foaming agent in a percentage between 4 and 10% by weight.

The base of the infill of the invention, based on a polyolefin, provides volume and acts as a carrier for the rest of the additives. In a preferred embodiment, this polyolefin is selected from low-density polyethylene (LDPE) and linear low-density polyethylene (LLDPE).

In another preferred embodiment, the polyolefin comes from recovered products of agricultural, industrial or post-consumer origin at the end of the useful life thereof with registered origin and traceability in order to guarantee the cleanliness and safety of the product.

In another preferred embodiment, the thermoplastic elastomer compound is selected from elastomers based on propylene and ethylene, and an ethylene-butylene/styrene thermoplastic copolymer.

In another preferred embodiment, the thermoplastic elastomer compound is in a percentage between 15 and 25% by weight.

The densifier of the composition provides specific weight to the particles preventing migrations. In a preferred embodiment, this densifier is selected from barium sulphate and calcium carbonate.

Finally, the foaming agent of the composition contributes porosity to the particles, amplifying the elastic effect of the thermoplastic elastomer compound (TPE). In a preferred embodiment, this foaming agent is selected from hydrocerol and azodicarbonamide.

In a second aspect, the invention relates to the process for manufacturing the infill for artificial turf as previously described, characterised in that it comprises:
i) washing and grinding the polyolefin;
ii) feeding the rest of the components of the infill of the invention into the compounding extruder wherein the temperature in the first segment of the extruder is comprised between 170 and 175°C;
iii) increasing the temperature to a temperature comprised between 210 and 220°C throughout the screw in a uniform manner;
iv) foaming the material coming from step iii);
v) cutting the material resulting from step iv) into two geometries at 50%, wherein the geometries are round and cross-shaped, both with dimensions larger than 5 mm.

A third aspect of the invention relates to the use of the infill as described above for preparing an artificial turf.

Another aspect of the invention relates to an artificial turf containing the infill of the invention which is characterised in that it has a content of short-chain polycyclic hydrocarbons of less than 0.15 mg/kg.

Throughout the description and the claims, the word "comprises" and its variants are not intended to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

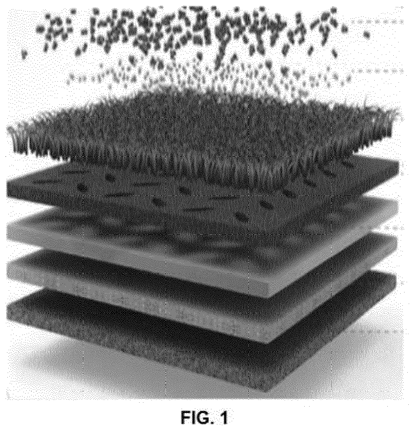

**Fig. 1** shows a composition diagram of artificial turf containing the infill of the invention.

### EXAMPLES

Next, the invention will be illustrated by means of tests carried out by the inventors

### Example 1. Processing of the infill of the invention

First step: Washing and grinding of the polyolefin (LDPE or LLDPE) coming from agricultural or industrial materials at the end of the useful life thereof after certification of the origin thereof via Blockchain technology.

Second step: feeding the percentages established in the formula into the compounding extruder, wherein the transport, plastification and mixing of the components take place resulting in the final product in the cutting step of the extruder.

The process parameters are adjusted as follows:
- The temperature in the first segment of the extruder, just at the drop from the compactor, is set at 170-175°C and increases uniformly along the screw up to 210-220°C in the cutting area.
- The vacuum pump is completely disconnected in the material filtering area in order to prevent degassing and enable the foaming of the product.

The shape of the infill is a mixture at 50% between two cutting geometries, one round and the other cross-shaped, both with dimensions larger than 5 mm.

### Example 2. Mechanical properties

The initial mechanical properties of artificial turf systems of the invention have been evaluated. In all cases, the tests were performed on an artificial turf surface of 60 mm without an elastic base, in order to verify the specific properties of the infill without interaction with other potential damping components.

A test sample has been built with the infill of the invention, with the same artificial turf systems used for the reference values. The sample is 1 m².

Thus, the system of the invention consists of a monofilament artificial turf of 60 mm, 13,000 dtex, 8750 stitches per m², gauge of 5/8", with filaments combined with a main one of 400 µm and a secondary one of 250 µm, approximately. 18 kg/m² of rounded quartz sand as stabilising infill and performance infill up to 1.5 mm long.

The standardised methods proposed by the FIFA Quality Program for Football Turf have been used as a reference.

Specifically, the following tests have been carried out: determination of shock absorption (FIFA Test Method 04), determination of vertical deformation (FIFA Test Method 05), determination of rotational resistance (FIFA Test Method 06), determination of vertical rebound of the ball (FIFA Test Method 01).

To get a more stable view of the result of each sample, 5 tests were performed in areas separated by at least 15 cm.

### Results

### Shock absorption

The sample presents a value of 62.0 ± 1.6%.

### Vertical deformation

The vertical deformation is within the normative ranges, both in FIFA Quality and in FIFA Quality Pro, with a result of 4.9 ± 0.4 mm.

### Rotational resistance

The rotational resistance has a value of 36.2 ± 2.3 Nm, obtaining results within those recommended in both FIFA Quality and in FIFA Quality Pro.

### Vertical rebound

The vertical rebound maintains the results in both FIFA Quality and in FIFA Quality Pro, with a value of 0.80 ± 0.05 m.

### Example 3. Pesticide residue analysis

The analysis, detection and quantification were carried out by gas chromatography and mass spectrometry (GC-MS/MS, multigas).

Pesticide residues have not been detected in concentrations equal to or greater than the quantification limit for the determinations analysed.

### Example 4. Determination of the content of short-chain polycyclic hydrocarbons (PAHs) in a sample of the infill of the invention versus a sample of SBR rubber

The determination of the content of short-chain polycyclic hydrocarbons (PAHs) was carried out according to Regulation (EC) No. 1907/2006 of the European Parliament (Requirement).

**Sample: Infill of the Invention**

| **Hydrocarbon** | **Concentration** | **Requirement** |
|---|---|---|
| Naphthalene | < 0.15 | 1000 |
| Acenaphthylene | < 0.15 | 1000 |
| Acenaphthene | < 0.15 | 1000 |
| Fluorene | < 0.15 | 1000 |
| Phenanthrene | < 0.15 | 1000 |
| Anthracene | < 0.15 | 1000 |
| Fluoranthene | < 0.15 | 1000 |
| Pyrene | < 0.15 | 1000 |
| Benzo(a)anthracene | < 0.15 | 1000 |
| Chrysene | < 0.15 | 1000 |
| Benzo(b)fluoranthene + Benzo(*j*)fluoranthene | < 0.15 | 1000 |
| Benzo(*k*)fluoranthene | < 0.15 | 1000 |
| Benzo(*e*)pyrene | < 0.15 | 1000 |
| Benzo(*a*)pyrene | < 0.15 | 1000 |
| Dibenzo(*a,h*)anthracene | < 0.15 | 1000 |
| Indeno(1,2,3-*cd*)pyrene | < 0.15 | 1000 |
| Benzo(ghi)perylene | < 0.15 | 1000 |
| Sum 18 PAHs | - | - |

**Sample: Rubber infill (SBR)**

| **Hydrocarbon** | **Concentration** | **Requirement** |
|---|---|---|
| Naphthalene | 0.41 | 1000 |
| Acenaphthylene | 0.39 | 1000 |
| Acenaphthene | 0.18 | 1000 |
| Fluorene | 0.27 | 1000 |
| Phenanthrene | 2.28 | 1000 |
| Anthracene | 0.21 | 1000 |
| Fluoranthene | 4.63 | 1000 |
| Pyrene | 17.6 | 1000 |
| Benzo(a)anthracene | 0.92 | 1000 |
| Chrysene | 2.53 | 1000 |
| Benzo(*b*)fluoranthene + Benzo(*j*)fluoranthene | 1.14 | 1000 |
| Benzo(*k*)fluoranthene | < 0.15 | 1000 |
| Benzo(*e*)pyrene | 3.25 | 1000 |
| Benzo(*a*)pyrene | 0.93 | 1000 |
| Dibenzo(*a,h*)anthracene | 0.66 | 1000 |
| Indeno(1,2,3-*cd*)pyrene | < 0.15 | 1000 |
| Benzo(*ghi*)perylene | 5.77 | 1000 |

### Example 5. Processing of the artificial turf containing the infill of the invention

The artificial turf or grass system consists of the following elements (Fig. 1):
A vertical drainage system, a layer of drainage material, an elastic layer and a carpet of 45 or 50 mm.

These elements are placed as follows:
• The drainage layer will be 20 centimetres and must be minimally compacted. Below is a system of pipes for collecting the water or a very well compacted gravel with slopes, even waterproofed, so that the water runs off to the sides wherein it is collected and dumped into the rainwater or sewer network.
• The drainage layer is optional and can be removed, such that the elastic layer is placed directly on the compacted and waterproofed gravel.
   This elastic layer can be made of different types and varies from 15 to 20 mm in height.
• The carpet is placed on the elastic layer with a silica sand infill of 10 to 15 kilograms per m² and an infill layer of approximately 5 kilos per m² which varies depending on the feature of the product.

## Claims

1. An infill for artificial turf **characterised in that** it comprises particles larger than 5 mm, and **in that** it has a composition comprising:
• a polyolefin base in a percentage between 53 and 82% by weight;
• a thermoplastic elastomer compound in a percentage between 10 and 30% by weight;
• a densifier in a percentage between 3 and 7% by weight;
• a foaming agent in a percentage between 4 and 10% by weight.

2. The infill according to claim 1, wherein the polyolefin is selected from low-density polyethylene and linear low-density polyethylene.

3. The infill according to any of the preceding claims, wherein the polyolefin comes from recovered products of agricultural or industrial origin.

4. The infill according to any of the preceding claims, wherein the thermoplastic elastomer compound is selected from elastomers based on propylene and ethylene, and an ethylene-butylene/styrene thermoplastic copolymer.

5. The infill according to any of the preceding claims, wherein the thermoplastic elastomeric compound is in a percentage between 15 and 25% by weight.

6. The infill according to any of the preceding claims, wherein the densifier is selected from barium sulphate and calcium carbonate.

7. The infill according to any of the preceding claims, wherein the foaming agent is selected from hydrocerol and azodicarbonamide.

8. A method for manufacturing the infill for turf according to any of the preceding claims, **characterised in that** it comprises:
i) washing and grinding the polyolefin;
ii) feeding the rest of the components of the infill of the invention into the compounding extruder wherein the temperature in the first segment of the extruder is comprised between 170 and 175°C;
iii) increasing the temperature to a temperature comprised between 210 and 220°C throughout the screw in a uniform manner;
iv) foaming the material coming from step iii);
v) cutting the material resulting from step iv) into two geometries at 50%, wherein the geometries are round and cross-shaped, both with dimensions larger than 5 mm.

9. A use of the material according to any of claims 1 to 7 for preparing an artificial turf.

10. An artificial turf **characterised in that** it contains the infill according to any of claims 1 to 7 and **in that** it has a content of short-chain polycyclic hydrocarbons of less than 0.15 mg/kg.
